# EUROPEAN PATENT APPLICATION

(11) **EP 3 978 268 A1**
(43) Date of publication of application: **06.04.2022**
(21) Application number: 20814879.1
(22) Date of filing: 27.05.2020
(51) Int. Cl.: B60C 1/00, C08F 236/10, C08L 9/06, C08L 77/00

(54) **RESIN MOLDED BODY, TIRE, AUTOMOTIVE PART, AND RESIN COMPOSITION**

(30) Priority: 31.05.2019 JP 2019103048
(71) Applicant: Bridgestone Corporation, Tokyo 104-8340 (JP)
(72) Inventor: HOTTA, Aya, Tokyo 104-8340 (JP); SHIONO, Saaya, Tokyo 104-8340 (JP); TARUTANI, Yasunori, Tokyo 104-8340 (JP); NISHIMURO, Yoichi, Tokyo 104-8340 (JP)
(74) Representative: Oxley, Robin John George
(86) International application number: PCT/JP2020/020908
(87) International publication number: WO 2020/241684

(57) **Abstract**

Provided are a resin molded article, a tire and an automotive part excellent in the balance between toughness and impact resistance and also excellent in elongation; and a resin composition capable of producing these. The resin composition contains a copolymer that contains a conjugated diene unit, a non-conjugated olefin unit and an aromatic vinyl unit and has a butylene unit content of 0 mol%, and a polyamide resin.

## Description

### Technical Field

The present invention relates to a resin molded article, a tire, an automotive part, and a resin composition.

### Background Art

Heretofore, various resin molded articles have been produced using olefin resins, polyamide resins and the like excellent in impact resistance and chemical resistance.

For example, from the viewpoint of obtaining polypropylene resin compositions suitable for use as paintless resin molding materials having both scratch resistance compatible with impact resistance, a polypropylene resin composition has been disclosed, which contains 75 to 90% by weight of a polypropylene resin, 7 to 15% by weight of a hydrogenated styrene/butadiene/styrene copolymer elastomer (A) having a styrene content of 18 to 42% by weight, and 3 to 10% by weight of a hydrogenated styrene/butadiene/styrene copolymer elastomer (B) having a styrene content of 12 to 15% by weight (for example, see PTL 1).

From the viewpoint of obtaining resin products having high impact resistance and transparency, a resin composition containing a multicomponent copolymer has been disclosed, in which the multicomponent copolymer contains a conjugated diene unit, a non-conjugated olefin unit and an aromatic vinyl unit and in which the content of the aromatic vinyl unit is 50 mol% or more and less than 100 mol% of all the multicomponent copolymer (for example, see PTL 2).

### Citation List

### Patent Literature

PTL 1: JP 2012-246366A
PTL 2: WO2017/065300A1

### Summary of Invention

### Technical Problem

However, the resin molded articles described in PTLs 1 and 2 are insufficient in terms of toughness though improvement in impact resistance is investigated therein.

An object of the present invention is to provide a resin molded article, a tire and an automotive part that achieve an excellent balance between toughness and impact resistance and also have excellent elongation, and also to provide a resin composition capable of producing these, and the present invention addresses a problem of achieving the object.

### Solution to Problem

<1> A resin composition containing a copolymer that contains a conjugated diene unit, a non-conjugated olefin unit and an aromatic vinyl unit and has a butylene unit content of 0 mol%, and a polyamide resin.
<2> The resin composition according to <1>, wherein the content of the copolymer is 1 to 81% by mass of the total mass of the copolymer and the polyamide resin.
<3> The resin composition according to <1> or <2>, wherein in the copolymer, the conjugated diene unit content is 5 to 70 mol%, the non-conjugated olefin unit content is 25 to 95 mol%, and the aromatic vinyl unit content is 2 to 30 mol%.
<4> The resin composition according to any one of <1> to <3>, wherein the melting point, as measured with a differential scanning calorimeter (DSC), of the copolymer is 30 to 130°C.
<5> The resin composition according to any one of <1> to <4>, wherein the polystyrene-equivalent weight-average molecular weight of the copolymer is 50,000 to 800,000.
<6> The resin composition according to any one of <1> to <5>, wherein the crystallinity degree of the copolymer is 0.5 to 50%.
<7> The resin composition according to any one of <1> to <6>, wherein the non-conjugated olefin unit is an acyclic non-conjugated olefin unit.
<8> The resin composition according to <7>, wherein the acyclic non-conjugated olefin unit is composed of an ethylene unit alone.
<9> The resin composition according to any one of <1> to <8>, wherein the aromatic vinyl unit contains a styrene unit.
<10> The resin composition according to any one of <1> to <9>, wherein the conjugated diene unit contains at least one selected from the group consisting of a 1,3-butadiene unit and an isoprene unit.
<11> The resin composition according to any one of <1> to <10>, further containing an antiaging agent.
<12> The resin composition according to any one of <1> to <11>, further containing a compatibilizer.
<13> The resin composition according to <12>, wherein the compatibilizer is a modified copolymer of a polymer modified with maleic acid, and the polymer to be modified is at least one selected from among a styrene-isobutylene-styrene block copolymer (SIBS), a styrene-butadiene-styrene block copolymer (SBS), a styrene-ethylene/butylene-styrene block copolymer (SEBS), and a styrene-ethylene/propylene block copolymer (SEPS).
<14> The resin composition according to <12> or <13>, wherein the content of the compatibilizer is 0.5 to 20 parts by mass relative to 100 parts by mass of the total of the copolymer and the polyamide resin.
<15> The resin composition according to any one of <11> to <14>, wherein the antiaging agent contains an antiaging agent that contains 2 or more branched alkyl group-having phenyl groups.
<16> A resin molded article using the resin composition of any one of <1> to <15>.
<17> A tire using the resin composition of any one of <1> to <15>.
<18> An automotive part using the resin composition of any one of <1> to <15>.

Advantageous Effects of Invention

According to the present invention, there can be provided a resin molded article, a tire and an automotive part that achieve an excellent balance between toughness and impact resistance and also have excellent elongation, and also a resin composition capable of producing these.

### Brief Description of Drawings

Fig. 1 is an AFM image of a surface of the resin molded article of Example 2.
Fig. 2 is an AFM image of a surface of the resin molded article of Example 3.
Fig. 3 is an AFM image of a surface of the resin molded article of Example 4.
Fig. 4 is an AFM image of a surface of the resin molded article of Example 5.
Fig. 5 is an AFM image of a surface of the resin molded article of Example 6.
Fig. 6 is an AFM image of a surface of the resin molded article of Example 7.
Fig. 7 is an AFM image of a surface of the resin molded article of Example 8.
Fig. 8 is an AFM image of a surface of the resin molded article of Comparative Example 2.
Fig. 9 is an AFM image of a surface of the resin molded article of Example 9.
Fig. 10 is an AFM image of a surface of the resin molded article of Example 10.
Fig. 11 is an AFM image of a surface of the resin molded article of Example 11.
Fig. 12 is an AFM image of a surface of the resin molded article of Example 12.
Fig. 13 is an AFM image of a surface of the resin molded article of Example 13.

### Description of Embodiments

### <Resin Composition>

The resin composition of the present invention contains a copolymer containing a conjugated diene unit, a non-conjugated olefin unit and an aromatic vinyl unit and having a butylene unit content of 0 mol%, and a polyamide resin.

The resin composition may further contain components of an antiaging agent, a filler, a crosslinking agent and a UV absorbent.

As having excellent characteristics, an olefin resin and a polyamide resin (PA resin) are widely used as automotive parts. In particular, they are much used as exterior parts such as bumpers. As having a high glass transition temperature (Tg), a polyamide resin has low impact resistance. Consequently, heretofore, PP/SEBS added with a hydrogenated styrene-ethylene/butylene-styrene copolymer (SEBS) as in PTL 1 has been used as a rubber component. However, SEBS has low toughness and therefore requires further improvement. PTL 2 discloses a resin composition capable of containing a copolymer that has high impact resistance and transparency along with various resins, but does not sufficiently investigate specific embodiments of a resin composition that contains the copolymer and a resin.

Even a resin molded article having high impact resistance tends to have low toughness when having high impact resistance at low temperatures, that is, for a resin molded article, low-temperature impact resistance and toughness are contradictory characteristics.

As opposed to this, the resin molded article of the present invention achieves an excellent balance between toughness and impact resistance, since the resin composition has the above-mentioned constitution. Further, the resin molded article of the present invention has another characteristic of excellent elongation.

### [Copolymer]

The copolymer contains a conjugated diene unit, a non-conjugated olefin unit and an aromatic vinyl unit and has a butylene unit content of 0 mol% (hereinafter this may be referred to as "copolymer in the invention").

In the hydrogenated styrene-butadiene-styrene copolymer elastomer used in PTL 1, a hydrogenated styrene-ethylene/butylene-styrene copolymer (SEBS) containing a butylene unit is used. In the copolymer in the present invention, the butylene unit content is 0 mol%, that is, the copolymer in the present invention does not contain SEBS.

The copolymer in the present invention contains a conjugated diene unit and has elasticity, and therefore functions as a rubber component.

In the case where the copolymer in the present invention contains three units alone of a conjugated diene unit, a non-conjugated olefin unit and an aromatic vinyl unit, the copolymer in the present invention may be referred to as "ternary copolymer". "Ternary" means the copolymer contains three different structural units. In the case where the copolymer further contains any one or more units in addition to three units of a conjugated diene unit, a non-conjugated olefin unit and an aromatic vinyl unit, the copolymer is referred to as "quaternary" and "pentanary" in accordance with the number of the structural units. Accordingly, the copolymer in the present invention is a multicomponent copolymer containing at least three units of a conjugated diene unit, a non-conjugated olefin unit and an aromatic vinyl unit.

Since the copolymer contains a non-conjugated olefin unit, the crystal component derived from the non-conjugated olefin unit is disrupted when the resin molded article is deformed greatly, and therefore the copolymer can liberate the energy as a melting energy. As a result, the resin molded article can realize high toughness. Further, since the copolymer contains a conjugated diene unit, the glass transition temperature (Tg) thereof is low, and therefore the copolymer can attain a high low-temperature impact resistance.

The copolymer in the present invention contains at least a conjugated diene unit, a non-conjugated olefin unit and an aromatic vinyl unit, and may be composed of a conjugated diene unit, a non-conjugated olefin unit and an aromatic vinyl unit alone, or may further contain any other monomer unit except a butylene unit.

### (Conjugated Diene Unit)

The conjugated diene unit is a structural unit derived from a conjugated diene compound serving as a monomer.

The conjugated diene compound as referred to herein means a diene compound of a conjugated system. The conjugated diene compound preferably has 4 to 8 carbon atoms. Specifically, examples of such a conjugated diene compound include 1,3-butadiene, isoprene, 1,3-pentadiene, 2,3-dimethyl-1,3-butadiene, and myrcene. One alone or two or more kinds of conjugated diene compounds may be used either singly or as combined.

The conjugated diene compound as a monomer of the copolymer preferably contains at least one selected from 1,3-butadiene and isoprene from the viewpoint of improving the balance of toughness and impact resistance of the resin molded article, and is more preferably composed of at least one only selected from the group consisting of 1,3-butadiene and isoprene, and is even more preferably 1,3-butadiene alone.

In other words, the conjugated diene unit in the copolymer preferably contains at least one selected from the group consisting of a 1,3-butadiene unit and an isoprene unit, and is more preferably composed of at least one only selected from a 1-3-butadiene unit and an isoprene unit, and is even more preferably a 1,3-butadiene unit alone.

In the copolymer, the content of the conjugated diene unit is preferably 5 mol% or more, more preferably 7 mol% or more, even more preferably 8 mol% or more, and is preferably 70 mol% or less, more preferably 60 mol% or less, even more preferably 50 mol% or less.

When the content of the conjugated diene unit is 5 mol% or more of the entire copolymer, a resin molded article excellent in impact resistance can be obtained, and when the content is 70 mol% or less, a resin molded article excellent in toughness can be obtained.

From the viewpoint of improving the balance between toughness and impact resistance of the resin molded article, the content of the conjugated diene unit is preferably within a range of 5 to 55 mol% of the entire copolymer, more preferably within a range of 7 to 50 mol%.

### (Non-conjugated Olefin Unit)

The non-conjugated olefin unit is a structural unit derived from a non-conjugated olefin compound serving as a monomer.

Here, the non-conjugated olefin compound means an aliphatic unsaturated hydrocarbon which is a compound having at least one carbon-carbon double bond. The non-conjugated olefin compound preferably has 2 to 10 carbon atoms. Specifically, examples of the non-conjugated olefin compound include α-olefins, such as ethylene, propylene, 1-pentene, 1-hexene, 1-heptene, and 1-octene; and hetero atom-substituted alkene compounds, such as vinyl pivalate, 1-phenylthioethene, and N-vinylpyrrolidone. The non-conjugated olefin compound may be used either alone or in combination of two or more thereof.

The non-conjugated olefin compound serving as a monomer of the copolymer is preferably an acyclic non-conjugated olefin compound from the viewpoint of improving the balance of toughness and impact resistance of the resin molded article, and the acyclic non-conjugated olefin compound is preferably an α-olefin, more preferably an α-olefin containing ethylene, and it is especially preferably ethylene alone.

In other words, the non-conjugated olefin unit in the copolymer is preferably an acyclic non-conjugated olefin unit, and the acyclic non-conjugated olefin unit is more preferably an α-olefin unit, even more preferably an α-olefin unit containing an ethylene unit, and it is especially preferably composed only of an ethylene unit.

The content of the non-conjugated olefin unit in the copolymer is preferably 25 mol% or more, more preferably 40 mol% or more, even more preferably 42 mol% or more, further more preferably 45 mol% or more, and is preferably 95 mol% or less, more preferably 90 mol% or less, even more preferably 87 mol% or less.

When the content of the non-conjugated olefin unit is 25 mol% or more of the entire copolymer, the content of the conjugated diene unit or the aromatic vinyl unit consequently decreases to improve the impact resistance of the resin molded article. When the content of the non-conjugated olefin unit is 95 mol% or less, the content of the conjugated diene unit or the aromatic vinyl unit consequently increases to improve the toughness of the resin molded article.

The content of the non-conjugated olefin unit is preferably within a range of 25 to 98 mol% of the entire copolymer, more preferably within a range of 40 to 95 mol%, even more preferably within a range of 42 to 90 mol%, further more preferably within a range of 45 to 87 mol%.

### (Aromatic Vinyl Unit)

The aromatic vinyl unit is a structural unit derived from an aromatic vinyl compound serving as a monomer.

Containing such an aromatic vinyl unit, the copolymer can get away from too much crystallization derived from the non-conjugated olefin unit therein, and therefore can achieve high toughness of the resin molded article while improving the rigidity thereof with hardly detracting from elasticity.

Here, the aromatic vinyl compound is an aromatic compound at least substituted with a vinyl group, and is not included in a conjugated diene compound. The aromatic vinyl compound preferably has 8 to 10 carbon atoms. Examples of such an aromatic vinyl compound include styrene, o-methylstyrene, m-methylstyrene, p-methylstyrene, o,p-dimethylstyrene, o-ethylstyrene, methylstyrene, and p-ethylstyrene. The aromatic vinyl compound may be used either alone or in combination of two or more thereof.

From the viewpoint of improving the balance of toughness and impact resistance of the resin molded article, the aromatic vinyl compound serving as a monomer of the copolymer preferably contains styrene, and it is more preferably composed only of styrene. In other words, the aromatic vinyl unit in the copolymer preferably contains a styrene unit, and it is more preferably composed only of a styrene unit.

The aromatic ring in the aromatic vinyl unit is not contained in the main chain of the copolymer so long as it does not bond to an adjacent unit.

The content of the aromatic vinyl unit in the copolymer is preferably 2 mol% or more, more preferably 3 mol% or more, and is preferably 30 mol% or less, more preferably 25 mol% or less When the content of the aromatic vinyl unit is 2 mol% or more, the resin molded article can be excellent in impact resistance. When the content of the aromatic vinyl unit is 30 mol% or less, the effects owing to the conjugated diene unit and the non-conjugated olefin unit are remarkable. The content of the aromatic vinyl unit is preferably within a range of 2 to 30 mol% of the entire copolymer, more preferably within a range of 2 to 25 mol%, even more preferably within a range of 3 to 25 mol%.

The number of kinds of the monomers of the copolymer is not particularly restricted so long as the copolymer contains a conjugated diene unit, a non-conjugated olefin unit and an aromatic vinyl unit, and does not contain a butylene unit. Although the copolymer may have any other structural unit (except butylene unit) than a conjugated diene unit, a non-conjugated olefin unit, and an aromatic vinyl unit, from the viewpoint of obtaining the desired effects, the content of the other structural unit is preferably 30 mol% or less of the entire copolymer, more preferably 20 mol% or less, even more preferably 10 mol% or less, and especially preferably, the copolymer does not contain any other structural unit, namely the content of the other structural unit therein is 0 mol%.

From the viewpoint of improving the balance of toughness and impact resistance of the resin molded article, the copolymer is preferably a polymer obtained through polymerization using at least, as monomers, only one conjugated diene compound, only one non-conjugated olefin compound, and only one aromatic compound.

In other words, the copolymer is preferably a copolymer containing only one conjugated diene unit, only one non-conjugated olefin unit, and only one aromatic vinyl unit, more preferably a ternary copolymer composed only of only one conjugated diene unit, only one non-conjugated olefin unit, and only one aromatic vinyl unit, even more preferably a ternary copolymer composed only of a 1,3-butadiene unit, an ethylene unit and a styrene unit. Here, conjugated diene units of a different bonding mode are included in the "only one conjugated diene unit".

In the copolymer, preferably from the viewpoint of improving the balance of toughness and impact resistance of the resin molded article, the content of the conjugated diene unit is 5 to 70 mol%, the content of the non-conjugated diene unit is 25 to 95 mol% and the content of the aromatic vinyl unit is 2 to 30 mol%.

The polystyrene-equivalent weight-average molecular weight (Mw) of the copolymer is preferably 50,000 to 2,000,000, more preferably 100,000 to 2,000,000, even more preferably 150,000 to 1,000,000. When Mw of the copolymer is 50,000 or more, the resin molded article can sufficiently secure impact resistance. When Mw is 2,000,000 or less, the processability of the resin composition is hardly worsened.

The polystyrene-equivalent number-average molecular weight (Mn) of the copolymer is preferably 30,000 to 1,500,000, more preferably 50,000 to 1,200,000, even more preferably 60,000 to 1,000,000. When Mn of the copolymer is 30,000 or more, the resin molded article can sufficiently secure impact resistance. When Mn is 1,500,000 or less, the processability of the resin composition is hardly worsened.

The molecular weight distribution [Mw/Mn (weight-average molecular weight/number-average molecular weight)] of the copolymer is preferably 1.00 to 4.00, more preferably 1.30 to 3.70, even more preferably 1.50 to 3.50. When the molecular weight distribution of the copolymer is 4.00 or less, the copolymer can secure sufficiently homogeneous physical properties.

The weight-average molecular weight (Mw), the number-average molecular weight (Mn) and the molecular weight distribution (Mw/Mn) of the copolymer can be determined in gel permeation chromatography (GPC) using polystyrene as a standard substance.

The endothermic peak energy at 0 to 120°C of the copolymer, as measured with a differential scanning calorimeter (DSC), is preferably 10 to 150 J/g, more preferably 30 to 120 J/g. When the endothermic peak energy of the copolymer is 10 J/g or more, the crystallinity of the copolymer is high to further improve toughness. When the endothermic peak energy of the copolymer is 150 J/g or less, the processability of the resin composition improves.

The endothermic peak energy of the copolymer can be measured using a differential scanning calorimeter according to JIS K7121-1987, for example, by heating the copolymer from -150°C to 150°C at a heating rate of 10°C/min.

The melting point of the copolymer, as measured with a differential scanning calorimeter (DSC), is preferably 30 to 130°C, more preferably 35 to 120°C, even more preferably 40 to 110°C. When the melting point of the copolymer is 30°C or higher, the crystallinity of the copolymer is high to further improve toughness of the resin molded article. When the melting point of the copolymer is 130°C or lower, the processability of the resin composition improves.

The melting point of the copolymer can be measured with a differential scanning calorimeter according to JIS K7121-1987.

The glass transition temperature (Tg) of the copolymer, as measured with a differential scanning calorimeter (DSC), is preferably 0°C or lower, more preferably -130 to -10°C, even more preferably -120 to -15°C. When the glass transition temperature of the copolymer is 0°C or lower, the impact resistance of the resin molded article can be further more improved.

The glass transition temperature of the copolymer can be measured using a differential scanning calorimeter according to JIS K7121-1987.

The degree of crystallinity of the copolymer is preferably 0.5 to 50%, more preferably 3 to 45%, even more preferably 5 to 45%. When the degree of crystallinity of the copolymer is 0.5% or more, toughness of the resin molded article can be further more improved while sufficiently securing the crystallinity of the copolymer owing to the conjugated olefin unit therein. When the degree of crystallinity of the copolymer is 50% or less, the processability on the occasion of kneading of the resin composition is improved, and the extrusion workability thereof is also improved.

Regarding the degree of crystallinity of the copolymer, a crystal melting energy of polyethylene of a 100% crystal component and a melting peak energy of the copolymer are measured, and from the energy ratio of polyethylene to the copolymer, the degree of crystallinity of the copolymer can be calculated. The melting peak energy can be measured with a differential scanning calorimeter.

As for the copolymer, it is preferred that the main chain thereof is composed only of an acyclic structure. According to this, the impact resistance of the resin molded article can be further improved.

For confirming whether or not the main chain of the copolymer has a cyclic structure, NMR is adopted as a main measuring means. Specifically, in the case where peaks derived from the cyclic structure existing in the main chain (for example, peaks appearing at 10 to 24 ppm for three-membered to five-membered rings) are not observed, it indicates that the main chain of the copolymer is composed only of an acyclic structure.

In the present invention, a main chain of a polymer means a linear molecular chain formed of all other molecular chains (long-molecular chain or short-molecular chain, or both the two) pendant-like bonding thereto [see Section 1.34 of "Glossary of Basic Terms in Polymer Science IUPAC Recommendations 1996", Pure Appl. Chem., 68, 2287-2311 (1996)].

An acyclic structure means a linear structure or a branched structure.

The copolymer can be produced via a polymerization process using a conjugated diene compound, a non-conjugated diene compound and an aromatic vinyl compound as monomers, and optionally via a coupling step, a washing step and any other step.

Here, in production of the copolymer, preferably a non-conjugated olefin compound and an aromatic vinyl compound alone are first added to a reactor and polymerized in the presence of a polymerization catalyst, without adding a conjugated diene compound thereto. In particular, in the case of using a catalyst composition to be mentioned below, a conjugated diene compound has a higher reactivity than a non-conjugated olefin compound and an aromatic vinyl compound, and therefore it would be difficult to polymerize at least one selected from the group consisting of a non-conjugated olefin compound and an aromatic vinyl compound in the presence of a conjugated diene compound. In addition, it would also be difficult to previously polymerize a conjugated diene compound and thereafter polymerize a non-conjugated olefin compound and an aromatic vinyl compound in a mode of additive polymerization, in view of the property of catalyst.

As the polymerization method, any arbitrary method is employable, such as a solution polymerization method, a suspension polymerization method, a liquid-phase bulk polymerization method, an emulsion polymerization method, a vapor-phase polymerization method or a solid-phase polymerization method. In the case where a solvent is used for polymerization, the solvent may be any one that is inert in polymerization. Examples of the solvent include toluene, cyclohexane, and normal hexane.

The polymerization step may be a one-stage reaction or a two-stage or more multistage reaction.

One-stage polymerization step is a step of polymerizing all the monomers to be polymerized at a time, that is, all a conjugated diene compound, a non-conjugated olefin compound, an aromatic vinyl compound and any other monomer, preferably all a conjugated diene compound, a non-conjugated olefin compound and an aromatic vinyl compound at a time.

The multistage polymerization step is a step of first reacting a part or all of one or two kinds of monomers to form a polymer (first polymerization stage), and then adding thereto remaining kinds of monomers not added in the first polymerization stage and a remaining part of the monomers added in the first polymerization stage and polymerizing them in one or more stages (second polymerization stage to final polymerization stage). In particular, in production of a copolymer, the polymerization step is preferably carried out in a mode of multistage polymerization.

In the polymerization step, preferably, the polymerization reaction is carried out in an atmosphere of an inert gas, preferably a nitrogen gas or an argon gas. The polymerization temperature for the polymerization reaction is not specifically limited, but is, for example, preferably within a range of -100°C to 200°C, and may be room temperature or so. The polymerization reaction pressure is preferably within a range of 0.1 to 10.0 MPa for the purpose of sufficiently taking a conjugated diene compound into the polymerization reaction system.

The polymerization reaction time is not also specifically limited, and is, for example, preferably within a range of 1 second to 10 days. The time may be appropriately selected depending on the kind of the polymerization catalyst and the condition of the polymerization temperature, etc.

In the step of polymerization of a conjugated diene compound, a polymerization terminator such as methanol, ethanol or isopropanol may be used to terminate the polymerization.

The polymerization step is preferably carried out in a mode of multistage polymerization. More preferably, the polymerization step includes a first step of mixing a first monomer material containing at least an aromatic vinyl compound and a polymerization catalyst to prepare a polymerization mixture, and a second step of adding a second monomer material containing at least one selected from the group consisting of a conjugated diene compound, a non-conjugated olefin compound and an aromatic vinyl compound, to the polymerization mixture, in which, more preferably, the first monomer material does not contain a conjugated diene compound and the second monomer material contains a conjugated diene compound.

The first monomer material to be used in the first step may contain a non-conjugated olefin compound along with an aromatic vinyl compound. The first monomer material may contain all the aromatic vinyl compound to be used, or may contain a part thereof. The non-conjugated olefin compound is contained in at least any of the first monomer material and the second monomer material.

Preferably, the first step is carried out inside a reactor in an atmosphere of an inert gas, preferably a nitrogen gas or an argon gas. The temperature (reaction temperature) in the first step is not specifically limited, and is, for example, preferably within a range of -100 to 200°C, or may also be room temperature or so. The pressure in the first step is not also specifically limited, but is preferably within a range of 0.1 to 10.0 MPa for the purpose of sufficiently taking an aromatic vinyl compound into the polymerization reaction system. The time to be spent for the first step (reaction time) may be appropriately selected depending on the type of the polymerization catalyst and the condition of the reaction temperature, etc. In the case where the reaction temperature is 25 to 80°C, the reaction time is preferably within a range of 5 minutes to 500 minutes.

In the first step, as the polymerization method for obtaining the polymerization mixture, any arbitrary method, such as a solution polymerization method, a suspension polymerization method, a liquid-phase bulk polymerization method, an emulsion polymerization method, a vapor-phase polymerization method, and a solid-phase polymerization method, can be adopted. In the case of using a solvent for the polymerization reaction, the solvent may be any one that is inert in the polymerization reaction, and examples thereof include toluene, cyclohexane, and normal hexane.

The second monomer material which is used in the second step is preferably only a conjugated diene compound, or a conjugated diene compound and a non-conjugated olefin compound, or a conjugated diene compound and an aromatic vinyl compound, or a conjugated diene compound, a non-conjugated olefin compound, and an aromatic vinyl compound.

In the case where the second monomer material contains at least one selected from a non-conjugated olefin compound and an aromatic vinyl compound in addition to a conjugated diene compound, these monomer materials may be mixed in advance along with a solvent and then introduced into the polymerization mixture, or each monomer material may be introduced thereinto in the form of a single state. The monomer materials may be added at the same time, or may be added successively.

In the second step, though a method of introducing the second monomer material into the polymerization mixture is not particularly restricted, it is preferred to continuously add the monomer materials to the polymerization mixture while controlling the flow rate of each monomer material (in a so-called metering mode). Here, in the case of using a monomer material that is a gas under the condition of the polymerization reaction system (for example, ethylene or the like as the non-conjugated olefin compound under a condition at room temperature and an atmospheric pressure), it can be introduced into the polymerization reaction system under a predetermined pressure.

Preferably, the second step is carried out inside a reactor in an atmosphere of an inert gas, preferably a nitrogen gas or an argon gas. The temperature (reaction temperature) in the second step is not specifically limited, and is, for example, preferably within a range of -100 to 200°C, or may also be room temperature or so. When the reaction temperature is elevated, the cis-1,4-bond selectivity in the conjugated diene unit may lower. The pressure in the second step is not also specifically limited, but is preferably within a range of 0.1 to 10.0 MPa for the purpose of sufficiently taking the monomer such as a conjugated diene compound into the polymerization reaction system. The time to be spent for the second step (reaction time) is not specifically limited and may be appropriately selected depending on the type of the polymerization catalyst and the condition of the reaction temperature, etc. For example, the time is preferably within a range of 0.1 hours to 10 days.

In the second step, a polymerization terminator such as methanol, ethanol or isopropanol may be used for terminating the polymerization reaction.

Preferably, the aforementioned polymerization step of a conjugated diene compound, a non-conjugated olefin compound, and an aromatic vinyl compound includes a step of polymerizing the respective monomers in the presence of at least one catalyst component selected from the following components (A) to (F). In the polymerization step, it is preferred to use at least one of the following components (A) to (F), and it is more preferred to combine two or more of the following components (A) to (F) and use them as a catalyst composition.
Component (A): A rare earth element compound or a reaction product of the rare earth element compound and a Lewis base.
Component (B): An organic metal compound.
Component (C): An aluminoxane.
Component (D): An ionic compound.
Component (E): A halogen compound.
Component (F): A cyclopentadiene skeleton-containing compound selected from a substituted or unsubstituted cyclopentadiene (a compound having a cyclopentadienyl group), a substituted or unsubstituted indene (a compound having an indenyl group), and a substituted or unsubstituted fluorene (a compound having a fluorenyl group).

The above components (A) to (F) can be used in the polymerization step by, for example, making WO 2018/092733 A as a reference.

The coupling step is a step of performing a reaction for modifying (coupling) at least a part (for example, the terminal) of the polymer chain of the copolymer obtained in the polymerization step.

In the coupling step, the coupling reaction is preferably performed on the occasion when the polymerization reaction has reached 100%.

A coupling agent which is used for the coupling reaction is not particularly restricted and can be appropriately selected depending on the intended purpose. Examples thereof include a tin-containing compound, such as bis(maleic acid-1-octadecyl)dioctyltin(IV); an isocyanate compound, such as 4,4'-diphenylmethane diisocyanate; and an alkoxysilane compound, such as glycidylpropyltrimethoxysilane. These may be used either alone or in combination of two or more thereof.

Of these, bis(maleic acid-1-octadecyl)dioctyltin(IV) is preferred from the standpoint of reaction efficiency and low gel formation.

The coupling reaction is able to increase the number-average molecular weight (Mn) of the multicomponent polymer.

The washing step is a step of washing the copolymer obtained in the polymerization step.

A medium to be used for washing is not particularly restricted and can be appropriately selected depending on the intended purpose. Examples thereof include methanol, ethanol, and 2-propanol. On the occasion of using a catalyst derived from a Lewis acid as the polymerization catalyst, in particular, an acid (for example, hydrochloric acid, sulfuric acid, and nitric acid) can be added to such a solvent and used. The amount of the acid to be added is preferably 15 mol% or less relative to the solvent. When the amount added is 15 mol% or less, the acid may hardly remain in the copolymer to have any negative influence on the reaction in kneading and vulcanization of the resin composition.

In the washing step, the residual amount of the catalyst in the copolymer can be suitably lowered.

Though not specifically limited, the content of the copolymer is preferably 1% by mass or more of the total mass of the copolymer and the polyamide resin in the present invention, more preferably 5% by mass or more, even more preferably 10% by mass or more, and is preferably 81% by mass or less, more preferably 75% by mass or less, even more preferably 65% by mass or less, further more preferably 50% by mass or less.

When the content of the copolymer is 1% by mass or more of the total mass of the copolymer and the polyamide resin in the present invention, the copolymer can sufficiently exhibit the effect thereof to sufficiently secure the impact resistance of the resin molded article. When the content of the copolymer is 81% by mass or less of the total mass of the copolymer and the polyamide resin in the present invention, the resin molded article can sufficiently secure toughness.

Preferably, the copolymer is dispersed as plural fine particles (dispersed-phase particles having a submicron or micron-order diameter) in the polyamide resin. The copolymer is not miscible with the polyamide resin, and therefore can exist in the polyamide resin as a dispersed phase. In such a manner, since the copolymer is dispersed in the polyamide resin as dispersed-phase particles, the resin composition can form a resin molded article having excellent toughness and impact resistance.

### [Polyamide Resin]

The resin composition contains a polyamide resin.

The polyamide resin is a resin having an amide bond (-NHCO-) in the main chain, and may be thermosetting or thermoplastic. Preferably, the polyamide resin for use in the present invention is not miscible with the above-mentioned copolymer.

The polyamide resin includes aliphatic polyamides such as polycapramide (nylon-6), poly-ω-aminoheptanoic acid (nylon-7), poly-ω-aminononanoic acid (nylon-9), polyundecanamide (nylon-11), polylauryllactam (nylon-12), polyethylenediamineadipamide (nylon-2,6), polytetramethyleneadipamide (nylon-4,6), polyhexamethyleneadipamide (nylon-6,6), polyhexamethylenesebacamide (nylon-6,10), polyhexamethylenedodecamide (nylon-6,12), polyoctamethyleneadipamide (nylon-8,6), and polydecamethyleneadipamide (nylon-10,8); and crystalline aromatic polyamides obtained by condensation of an aromatic diamine such as metaxylylenediamine and paraxylenediamine, and a dicarboxylic acid such as adipic acid, suberic acid, sebacic acid, cyclohexanedicarboxylic acid, terephthalic acid and isophthalic acid or a derivative thereof.

Above all, nylon-6, nylon-6,6 and nylon-12 are preferred, and nylon-6 (also referred to as polyamide 6) is more preferred.

From the viewpoint of improving low-temperature impact resistance of the resin molded article, the polystyrene-equivalent number-average molecular weight (Mn) of the polyamide resin is preferably 5,000 to 10,000,000, more preferably 7,000 to 1,000,000, even more preferably 10,000 to 1,000,000.

When Mn of the polyamide resin is 5,000 or more, the resin molded article can be excellent in low-temperature impact resistance, and when Mn is 10,000,000 or less, the resin molded article can be excellent in toughness.

From the viewpoint of miscibility with the copolymer in the present invention, the polyamide resin preferably has a relatively high viscosity.

The polyamide resin as above includes UBESTA (e.g., 3014U, 3020U) and UBE Nylon (Injection 1022B, Injection 1030B) by Ube Industries, Ltd.; and VESTAMID (e.g., L1600, L1700) by Daicel-Evonik Ltd.

The content of the polyamide resin is preferably 19% by mass or more of the total mass of the copolymer in the present invention and the polyamide resin, more preferably 25% by mass or more, even more preferably 35% by mass or more, further more preferably 50% by mass or more, and is preferably 99% by mass or less, more preferably 95% by mass or less, even more preferably 90% by mass or less.

When the content of the polyamide resin is 19% by mass or more of the total mass of the copolymer in the present invention and the polyamide resin, the copolymer can sufficiently exhibit the effect to sufficiently secure the impact resistance of the resin molded article. When the content of the copolymer is 99% by mass or less of the total mass of the copolymer in the present invention and the polyamide resin, the resin molded article can sufficiently secure toughness.

### (Antiaging Agent)

Preferably, the resin composition contains an antiaging agent from the viewpoint of more improving the impact resistance and the toughness of the resin molded article. Also preferably, the resin composition contains an antiaging agent for preventing the conjugated diene unit from gelling at high temperature in melt-kneading the resin composition.

Examples of the antiaging agent include amine-ketone compounds, imidazole compounds, amine compounds, phenolic compounds, sulfur compounds and phosphorus compounds.

Especially preferably, the resin composition contains an antiaging agent containing at least two, branched alkyl group-having phenyl groups. Using an antiaging agent containing at least two, branched alkyl group-having phenyl groups, the dispersibility of the copolymer in the present invention and the polyamide resin can be bettered. In addition, such an antiaging agent containing at least two, branched alkyl group-having phenyl groups can prevent the copolymer from gelling in mixing the copolymer in the present invention and the polyamide resin at high temperatures.

More specifically, the antiaging agent preferably has a structure represented by the following formula (1) or (2).

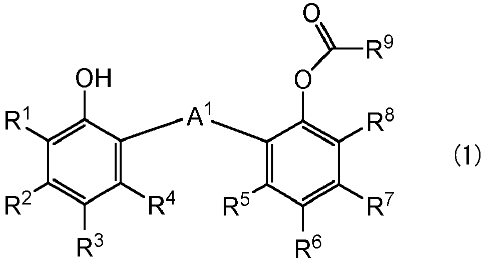

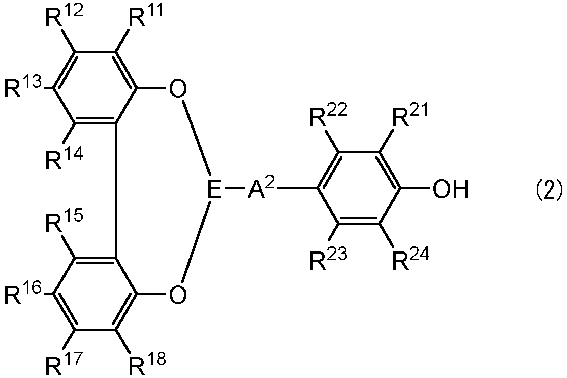

In the formula (1) and the formula (2), R¹ to R⁸, R¹¹ to R¹⁸, and R²¹ to R²⁴ each represent a hydrogen atom, a linear alkyl group, a cyclic alkyl group or a branched alkyl group, and at least one of R¹ to R⁸, as well as at least one of R¹¹ to R¹⁸, and R²¹ to R²⁴ is a branched alkyl group. R¹ to R⁸, R¹¹ to R¹⁸, and R²¹ to R²⁴ each may be the same as or different from each other. R⁹ represents a hydrocarbon group. A¹ and A² each represent a linking group. E represents a trivalent hetero atom.

The linear alkyl group preferably has 1 to 12 carbon atoms, more preferably 1 to 8, even more preferably 1 to 5, and further more preferably 1 to 3 carbon atoms. Specifically, examples of the group include a methyl group, a ethyl group, a n-propyl group, a n-butyl group, a n-pentyl group, a n-hexyl group, a n-heptyl group, a n-octyl group, a n-nonyl group, a n-decyl group and a n-dodecyl group. The linear alkyl group may further have a substituent such as a halogen atom.

Among the above, the linear alkyl group is preferably an unsubstituted linear alkyl group, more preferably a methyl group, an ethyl group or a n-propyl group.

The cyclic alkyl group preferably has 5 to 12 carbon atoms, more preferably 6 to 12, and even more preferably 6 to 8 carbon atoms. Specifically, examples of the group include a cyclopentyl group, a cyclohexyl group, and a cyclooctyl group. The cyclic alkyl group may further have a substituent such as an alkyl group having 1 to 3 carbon atoms, and a halogen atom.

Among the above, the cyclic alkyl group is preferably an unsubstituted cyclic alkyl group, more preferably a cyclohexyl group.

The branched alkyl group preferably has 3 to 12 carbon atoms, more preferably 3 to 8, even more preferably 4 to 8, and further more preferably 4 to 6 carbon atoms. Specifically, examples of the group include an isopropyl group, a 2-butyl group, a tert-butyl group, a tert-pentyl group, a 2-hexyl group, a 2-heptyl group, a 2-octyl group and a 2-dodecyl group. The branched alkyl group may further have a substituent such as a halogen atom.

Among the above, the branched alkyl group is preferably an unsubstituted branched alkyl group, more preferably an isopropyl group, a 2-butyl group, a tert-butyl group, or a tert-pentyl group, even more preferably a tert-butyl group or a tert-pentyl group.

Examples of the hydrocarbon group represented by R⁹ include an alkyl group, an alkenyl group, and an alkynyl group.

The alkyl group includes the linear alkyl group, the cyclic alkyl group and the branched alkyl group exemplified hereinabove for R¹ to R⁸ and others, and the preferred range thereof is also the same as that for the latter.

Preferably, the alkenyl group and the alkynyl group each have 2 to 8 carbon atoms, and examples thereof include a vinyl group.

The linking group represented by A¹ and A² includes a divalent hydrocarbon group having 1 to 6 carbon atoms, which may contain a divalent or higher valent hetero atom. The hydrocarbon of the hydrocarbon group may be a saturated hydrocarbon, or an unsaturated hydrocarbon. Above all, the linking group is preferably a saturated hydrocarbon group, and preferably has 1 to 5 carbon atoms, more preferably 1 to 4 carbon atoms.

Examples of the divalent or higher valent hetero atom include an oxygen atom and a sulfur atom.

The linking group may further have a substituent such as a halogen atom, a methyl group or an ethyl group.

The trivalent hetero atom represented by E includes a sulfur atom and a phosphorus atom, and is preferably a phosphorus atom above all.

In the formula (1), at least one of R¹ to R⁴, and at least one of R⁵ to R⁸ each have a branched alkyl group. In the formula (2), preferably, at least two selected from the group consisting of a group Ra selected from R¹¹ to R¹⁴, Rb selected from R¹⁵ to R¹⁸, and Rc selected from R²¹ to R²⁴ each have a branched alkyl group.

The branched alkyl group-having phenyl group preferably has plural branched alkyl groups.

Above all, at least two of R¹ to R⁴, at least two of R⁵ to R⁸, at least two of R¹¹ to R¹⁴, and at least two of R¹⁵ to R¹⁸ each are preferably a branched alkyl group.

Preferably, the formula (1) is the following structure:
R¹ and R⁸ each are a branched alkyl group; R², R⁴, R⁵ and R⁷ are hydrogen atoms; R³ and R⁶ each are a branched alkyl group or a linear alkyl group; R⁹ is an unsaturated hydrocarbon group; and A¹ is a divalent saturated hydrocarbon group.

More preferably, the formula (1) is the following structure:
R¹ and R⁸ each are an unsubstituted branched alkyl group having 3 to 6 carbon atoms; R², R⁴, R⁵ and R⁷ are hydrogen atoms; R³ and R⁶ each are an unsubstituted branched alkyl group having 4 to 5 carbon atoms, or an unsubstituted linear alkyl group having 1 to 3 carbon atoms; R⁹ is an unsaturated vinyl group; and A¹ is a methylene group substituted with an alkyl group, or an unsubstituted methylene group.

Preferably, the formula (2) is the following structure:
R¹¹, R¹³, R¹⁶, R¹⁸ and R²¹ each are a branched alkyl group; R¹², R¹⁴, R¹⁵, R¹⁷, R²² and R²³ are hydrogen atoms; R²⁴ is a linear alkyl group; A² is a divalent saturated hydrocarbon group containing an oxygen atom; and E is a sulfur atom or a phosphorus atom.

More preferably, the formula (2) is the following structure:
R¹¹, R¹³, R¹⁶, R¹⁸ and R²¹ each are an unsubstituted branched alkyl group having 3 to 5 carbon atoms; R¹², R¹⁴, R¹⁵, R¹⁷, R²² and R²³ are hydrogen atoms; R²⁴ is an unsubstituted linear alkyl group having 1 to 3 carbon atoms; A² is an unsubstituted alkyleneoxy group having 2 to 5 carbon atoms (-OR- where R is an unsubstituted alkylene having 2 to 5 carbon atoms); and E is a phosphorus atom.

More preferably, the compound having a structure of the formula (1) is a compound having a structure represented by the following formula (3) or (4).

More preferably, the compound having a structure of the formula (2) is a compound having a structure represented by the following formula (5).

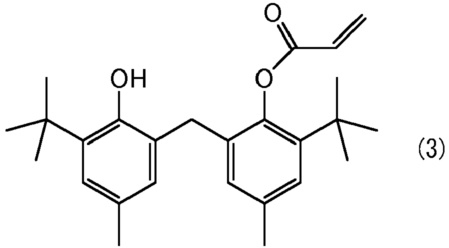

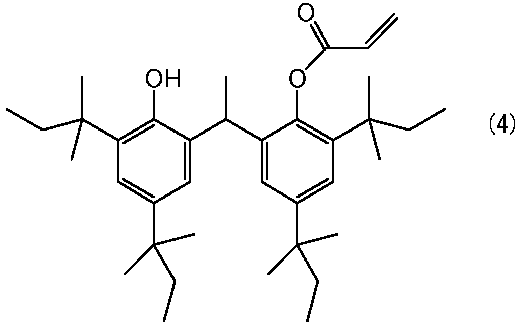

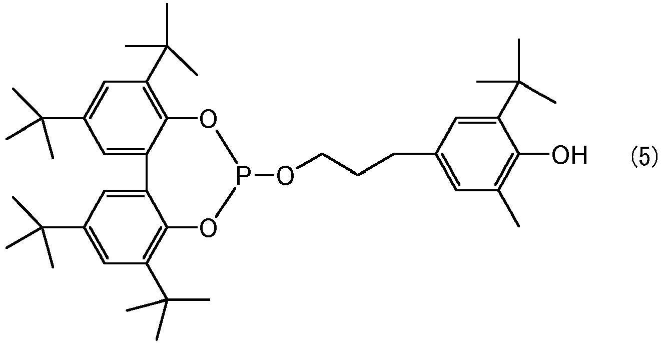

Among the above, the antiaging agent that contains at least two, branched alkyl group-having phenyl groups is even more preferably a compound having a structure represented by the above formula (4) or (5).

For the antiaging agent that contains at least two, branched alkyl group-having phenyl groups, one alone or two or more kinds of the compounds having the above-mentioned structure can be used either singly or as mixed.

The content of the antiaging agent in the resin composition is preferably 0.1 to 5 parts by mass relative to 100 parts by mass of the total of the copolymer in the present invention and the polyamide resin, more preferably 0.5 to 3 parts by mass.

### [Compatibilizer]

From the viewpoint of increasing the dispersibility of the copolymer in the present invention and the polyamide resin, preferably, the resin composition further contains a compatibilizer.

The compatibilizer includes modified copolymers of a styrene-isobutylene-styrene block copolymer (SIBS), a styrene-butadiene-styrene block copolymer (SBS), a styrene-ethylene/butylene-styrene block copolymer (SEBS; polystyrene-hydrogenated polybutadiene-polystyrene block copolymer) and a styrene-ethylene/propylene block copolymer (SEPS; polystyrene-hydrogenated polyisoprene-polystyrene block copolymer) each modified with maleic acid. In the present invention, at least one selected from these modified copolymers is preferred.

The content of the compatibilizer in the resin composition is preferably 0.5 to 20 parts by mass relative to 100 parts by mass of the total of the copolymer in the present invention and the polyamide resin, more preferably 2 to 10 parts by mass.

### [Various Components]

The resin composition may contain compounding ingredients that are generally used in the resin industry, for example, an elastomer component, any other resin component than a polyamide resin, a crosslinking agent, a softener, stearic acid, zinc oxide and a crosslinking accelerator, as appropriately selected within a range not detracting from the object of the present invention.

### (Elastomer Component)

The elastomer component includes any other rubber component than the copolymer in the present invention, and a thermoplastic elastomer.

### (1) Rubber Component

Examples of the other rubber component than the copolymer in the present invention include a dienic rubber.

The dienic rubber includes a natural rubber (NR) and a synthetic dienic rubber.

Specifically, the synthetic dienic rubber includes a polyisoprene rubber (IR), a polybutadiene rubber (BR), a styrene-butadiene copolymer rubber (SBR), a chloroprene rubber (CR), a halogenobutyl rubber, and an acrylonitrile-butadiene rubber (NBR).

One alone or two or more kinds of dienic rubbers can be used either singly or as combined. The dienic rubber may be modified.

The rubber component may contain a non-dienic rubber.

### (2) Thermoplastic Elastomer

Examples of the thermoplastic elastomer include a styrene-based elastomer, an olefin-based elastomer, an ester-based elastomer, an urethane-based elastomer, an amide-based elastomer, and a hard vinyl chloride-based elastomer. In the present invention, one alone or two or more kinds of these elastomers can be used.

### (Resin Component)

The resin composition of the present invention may contain any other resin component than a polyamide resin. Examples of the other resin component applicable to the present invention include a thermoplastic resin except a polyamide resin, and a thermosetting resin.

### (Filler)

The resin composition may contain a filler.

Contained in the resin composition, the filler can improve the characteristics such as wear resistance of the resin molded article.

The filler is not specifically limited, and for example, a reinforcing filler capable of reinforcing the resin composition can be used. Examples of the reinforcing filler include silica, carbon black, talc, fibers, calcium carbonate, titanium oxide, graphite, metal powder, clay, mica, glass flakes, calcium titanate, alumina, Eval, and water-absorbing polymer gel. One alone or two or more of these can be used either singly or as combined. Above all, silica, carbon black, talc, fibers and calcium carbonate are more preferred.

### [Carbon Black]

Not specifically limited, carbon black can be appropriately selected depending on the intended purpose. For example, carbon black on a grade FEF, SRF, HAF, ISAF or SAF is preferred, and carbon black on a grade of HAF, ISAF or SAF is more preferred.

### [Silica]

Silica is not specifically limited, and an ordinary-grade silica, as well as a specialty silica prepared by surface processing with a silane coupling agent or the like can be used depending on the intended purpose. As silica, for example, a wet-process silica is preferably used.

### [Fibers]

Fibers are not specifically limited, and glass fibers, cellulose fibers, carbon fibers, metal fibers, aramid fibers and gypsum fibers can be selected depending on the intended purpose. Above all, glass fibers, carbon fibers, aramid fibers and cellulose fibers are more preferred.

### (Crosslinking Agent)

Not specifically limited, in general, peroxides, sulfur, oximes, amines and UV curing agents can be used as the crosslinking agent.

The copolymer in the present invention contains a conjugated diene unit, and therefore can be crosslinked (vulcanized) with sulfur. Examples of sulfur include powdery sulfur, precipitated sulfur, colloidal sulfur, surface-treated sulfur, and insoluble sulfur.

### <Production Method for Resin Composition>

The resin composition can be produced by blending the copolymer in the present invention and a polyamide resin, and in addition thereto, other various ingredients such as an antiaging agent, and kneading them with a kneading machine such as a Bumbary mixer, a roller, an internal mixer, a single-screw extrusion kneader, or a twin-screw extrusion kneader.

Preferably, in production of the resin composition, the components to be in the resin composition are blended each in an amount shown as the content of each component in the resin composition.

Kneading of the components can be carried out all in one stage, or can be carried out in two or more stages.

In the case where the resin composition is extruded by melt-extruding using an extrusion kneader, the extruded resin composition may be directly pelletized into pellets, or may be first formed in strands, and the strands may be pelletized into pellets. The shape of the pellets may be any ordinary one, such as columns, pillars and spheres.

### <Resin Molded Article]

The resin molded article of the present invention is formed using the resin composition of the present invention.

For example, the pelletized resin composition can be molded by injection molding or extrusion molding to give a resin molded article.

The resin composition may be crosslinked with the above-mentioned crosslinking agent, or not using such a crosslinking agent, the resin composition may be crosslinked by electron beam crosslinking or microwave irradiation to give a resin molded article.

As having a dienic moiety, the resin molded article of the present invention can be etched like ABS (acrylonitrile butadiene styrene) resin and can be plated. The plating condition is not specifically limited, and the resin molded article can be plated in a known plating method (electroless plating or electroplating). When plated, the resin molded article can be given various functionality such as electroconductivity, electromagnetic wave shieldability and designability, and therefore can be given various additional value.

Regarding injection molding, not only ordinary molding methods but also any other molding methods of injection compression molding, injection press molding, gas-assisted injection molding, foam molding, insert molding, in-mold coat molding, insulated runner molding, rapid heating and cooling molding, two-color molding, multicolor molding, sandwich molding or ultrahigh speed injection molding can be employed to give molded articles. For the molding, any of a cold runner system or a hot runner system can be selected.

In extrusion molding, various profile extrusion products, sheets and films can be obtained. For forming sheets and films, an inflation method, a calender method or a casting method may also be employed.

The resin molded article may be further stretched.

The resin molded article of the present invention preferably has a microstructure of a so-called "sea-island" structure in which fine particles (dispersed-phase particles) of the copolymer are dispersed in a polyamide resin. Such a structure can be confirmed, for example, by observing the resin molded article with an optical microscope, a scanning electron microscope or an atomic force microscope.

The resin molded article of the present invention is excellent in toughness and impact resistance and therefore can be applied to various products. For example, it is favorable for tires and automotive parts (e.g., automotive seats, automotive batteries (e.g., lithium ion batteries), weather strips, hose tubes, rubber vibration insulators, cables, sealants).

In addition, the resin composition of the present invention is favorable for conveyor belts, crawlers, rubber vibration insulators, hoses, resin piping, sound absorbers, bedclothes, precision parts for office machinery (OA rollers), bicycle frames, golf balls, tennis rackets, golf shafts, resin additives, filters, adhesives, pressure-sensitive adhesives, inks, medical machinery (medical-use tubes, bags, microneedles, rubber sleeves, artificial organs, caps, packings, syringe gaskets, medicine stoppers, artificial legs, artificial limbs), cosmetics (UV powders, puffs, containers, waxes, shampoos, conditioners), detergents, building materials (floor materials, vibration control rubbers, seismic isolation rubbers, architectural films, sound absorbers, water-proof sheets, heat insulators, joint materials, sealant materials), wrapping materials, liquid-crystal materials, organic EL materials, organic semiconductor materials, electronic materials, electronic devices, communication instruments, aircraft members, machine members, electronic members, agricultural materials, electric cords, cables, fibers (wearable bases), daily necessaries (tooth brushes, shoe soles, glasses, lures, binoculars, toys, dust masks, garden hoses), robot members, optical members, road materials (asphalts, guard rails, poles, signs), protectors (shoes, protective vests), exterior members for electronic appliances, OA exterior members, soles and sealants.

In the above, OA means office automation, UV means ultraviolet, and EL means electroluminescence.

### Examples

The present invention is hereunder described in more detail by reference to Examples, but it should be construed that these Examples are for exemplification of the present invention and do not whatsoever restrict the present invention.

### [Example 1, Comparative Example 1]

### <Preparation of Resin Composition>

Resin compositions were prepared according to the formulation in Table 2.

Details of the components in Table 2 are as mentioned below.

Polyamide resin (PA resin) 1: Polyamide 6, trade name "UBE Nylon (registered trademark) Injection 1022B" by Ube Industries, Ltd.

Polymer 1: Polymer produced according to the following production method. Polymer 101: Hydrogenated styrene-based thermoplastic elastomer (SEBS), trade name "Tough-Tech (registered trademark) H1062" by Asahi Kasei Corp., crystallinity degree: 0%.

Compatibilizer 1: trade name "Tough-Tech (registered trademark) M1913" by

Asahi Kasei Corp.

Antiaging Agent 1: 2,2'-methylenebis(4-ethyl-6-tert-butylphenol), "Nocrac (registered trademark) NS-5" by Ouchi Shinko Chemical Industrial Co., Ltd.

### [Production Method for Polymer 1]

### 1. Synthesis Method for Polymer 1 (copolymer in the invention)

52 g of styrene and 762 g of toluene were put into a fully-dried, 2000-mL pressure-resistant stainless reactor.

In a glove box in a nitrogen atmosphere, 0.031 mmol of mono(bis(1,3-tert-butydimethylsilyl)indenyl)bis(bis(dimethylsilyl)amide) gadolinium complex 1,3-[(t-Bu)Me₂Si]₂C₉H₅Gd[N(SiHMe₂)2], and 0.031 mmol of dimethylanilinium tetrakis(pentafluorophenyl)borate [Me₂NHPhB(C₆F₅)₄] were put into a glass container, and 21 g of toluene was added thereto to prepare a catalyst solution. The catalyst solution was added to the previous, pressure-resistant stainless reactor and heated up to 60°C. "t-Bu" means a tert-butyl group, "Me" means a methyl group, and "Ph" means a phenyl group (the same applies to Production Methods for Polymers 2 and 3).

Next, ethylene was introduced into the pressure-resistant stainless reactor at a pressure of 1.0 MPa, and copolymerization was carried out at 75°C for a total of 9 hours. Regarding 1,3-butadiene, 108 g of a toluene solution containing 27 g of 1,3-butadiene was continuously added at a rate of 0.6 mL/min.

Next, 1 mL of an isopropanol solution of 5% by mass of 2,2'-methylene-bis(4-ethyl-6-t-butylphenol) (NS-5) was added to the pressure-resistant stainless reactor to terminate the reaction.

Next, the copolymer was separated using a large amount of methanol, and dried in vacuum at 50°C to give a polymer 1.

The physical properties of the resultant polymer 1 are shown in Table 1.

**Table 1**

| | Polymer 1 |
|---|---|
| Weight-Average Molecular Weight (Mw) (×10³) | 403 |
| Number-Average Molecular Weight (Mn) (×10³) | 156 |
| Peak Top Molecular Weight (Mp) (×10³) | 248 |
| Molecular Weight Distribution (Mw/Mn) | 2.6 |
| Ethylene Unit Content (mol%) | 85 |
| Butadiene Unit Content (mol%) | 8 |
| Styrene Unit Content (mol%) | 7 |
| Melting Point (°C) | 49 |
| Crystallinity Degree (%) | 13.1 |

The polymer 1 did not have a peak at 10 to 24 ppm in the ¹³C-NMR spectral chart thereof, which confirms that the main chain of the polymer 1 synthesized here was composed of an acyclic structure alone.

These physical properties were measured according to the following methods.

### [Measurement Methods for Physical Properties of Polymer]

### (1) Number-average molecular weight (Mn), weight-average molecular weight (Mw), peak top molecular weight (Mp) and molecular weight distribution (Mw/Mn)

The number-average molecular weight (Mn), the weight-average molecular weight (Mw), peak top molecular weight (Mp) and the molecular weight distribution (Mw/Mn) of the copolymer as expressed in terms of polystyrene were determined on the basis of monodispersed polystyrene through gel permeation chromatography [GPC: HLC-8121GPC/HT by Tosoh Corporation with two columns of GMH_{HR}-H(S)HT, by Tosoh Corporation and a detector of a differential refractometer (RI)]. The measurement temperature is 40°C.

### (2) Content of ethylene unit, butadiene unit and styrene unit

The content (mol%) of the ethylene unit, the butadiene unit and the styrene unit in the copolymer was determined from integral ratios of the respective peaks in the ¹H-NMR spectrum (100°C, d-tetrachloroethane standard: 6 ppm).

In the polymer 1, the total of the ethylene unit content, the butadiene unit content and the styrene unit content was 100 mol%, and a butylene unit content was 0 mol%.

### (3) Melting point

The melting point of the copolymer was measured with a differential scanning calorimeter (DSC, "DSC Q2000" by TA Instruments Japan Inc.) in conformity with JIS K7121-1987.

### (4) Crystallinity degree

The crystal melting energy of polyethylene in a 100% crystal component and the melting peak energy at 0 to 120°C of the resultant copolymer were measured, and from the energy ratio of polyethylene to the copolymer, the crystallinity degree was calculated. The melting peak energy was measured with a differential scanning calorimeter (DSC, "DSC Q2000" by TA Instruments Japan Inc.).

### (5) Confirmation of main chain structure

The ¹³C-NMR spectrum of the synthesized copolymer was measured.

### <Production of Resin Molded Article>

According to the formulation in Table 2 and using a 90-cc Laboplastomill (by Toyo Seiki Kogyo Co., Ltd.), the components were blended at 180°C and at 50 rpm for 5 minutes. The resultant resin composition was pressed at 180°C for 5 minutes using a mold having a thickness of 2 mm, and then rapidly cooled for 5 minutes to give a resin molded article of 150 mm × 150 mm × 2 mm.

A Charpy test piece (resin molded article) used for evaluation of impact resistance was produced as follows.

The resin composition prepared according to the formulation in Table 2 was molded into a test piece having a dimension of 10 mm × 80 mm × 4 mm, using a 15-ton injection-molding machine (Roboshot by Fanuc Corporation), at an injection speed of 30 mm/s, a cylinder temperature of 200°C and a mold temperature of 40°C, and then the resultant test piece was notched using a notching machine to be a Charpy test piece.

### <Evaluation>

### (1) Toughness

The elongation at breakage (%GL) and the stress at rupture (MPa) of the resin molded article were measured, and the toughness of the resin molded article was calculated as "(elongation at breakage × stress at rupture)/2". The calculated value in Comparative Example 1 is referred to as 100, and the calculated value in Example 1 was indexed based on the former. The resultant toughness index is shown in Table 2.

A test piece for a tensile test (JIS-K 7127, test piece type 1B size) was sampled from the resin molded article, the strength thereof was measured in a tensile test at a rate of 100 mm/min, the measurement was stopped at the time at which the resin molded article was broken, the elongation at that time was referred to as an elongation at breakage, and the strength at that time was referred to as a stress at rupture.

As a measurement apparatus, a universal tester ("Tensilon RTC-1310A" by A & D Corporation) was used.

### (2) Impact Resistance

A sample of a resin molded article left in an environment at -30°C and a sample of the resin molded article left in an environment at 30°C were analyzed to measure the notched Charpy impact value thereof according to ISO 179. The measured value of the impact resistance at 30°C in Comparative Example 1 is referred to as 100, and the measured value at 30°C in Example 1, the measured value at -30°C in Example 1 and the measured value at -30°C in Comparative Example 1 each were indexed based on the former. The resultant impact resistance index is shown in Table 2.

### (3) Balance between Toughness and Impact Resistance

In Example 1 and Comparative Example 1, a total of the toughness index and the impact resistance index at 30°C, and a total of the toughness index and the impact resistance index at -30°C each were calculated, and shown in Table 2. A larger numerical value means that the resin molded article is more excellent in the balance of toughness and impact resistance.

**Table 2**

| | | | Example 1 | Comparativ e Example 1 |
|---|---|---|---|---|
| Resin Composition | PA Resin 1 | part by mass | 70 | 70 |
| | Polymer 1 | part by mass | 30 | - |
| | Polymer 101 | part by mass | - | 30 |
| | Compatibilizer 1 | part by mass | 10 | 10 |
| | Antiaging Agent 1 | part by mass | 1 | 1 |
| Resin Molded Article | Toughness | - | 251 | 100 |
| | Impact Resistance (30°C) | - | 98 | 100 |
| | Impact Resistance (-30°C) | - | 15 | 22 |
| | Balance between Toughness and Impact Resistance (30°C) | - | 349 | 200 |
| | Balance between Toughness and Impact Resistance (-30°C) | - | 266 | 122 |

As known from Table 2, the resin molded article obtained from a system (Comparative Example 1) using, as conventionally, SEBS (polymer 101) along with a polyamide resin (PA resin 1) is not excellent in the balance between toughness and impact resistance.

On the other hand, the resin molded article of Example has a toughness index of more than 2.5 times the index in Comparative Example 1 and has a high toughness, and has a markedly larger balance index of toughness and impact resistance at 30°C and -30°C than in Comparative Example 1, that is, the resin molded article of Example 1 is excellent in the balance of toughness and impact resistance.

As in the above, a resin molded article having a high toughness and a good balance between toughness and impact resistance is applied to tires and bumpers, it is possible to obtain tires and bumpers excellent in both impact resistance and toughness even in cold climates.

### [Examples 2 to 8, Comparative Example 2]

### <Preparation of Resin Composition>

Resin compositions were prepared according to the formulation in Table 4.

Details of the components in Table 4 are as follows.

Polyamide resin (PA resin) 1: Polyamide 6, trade name "UBE Nylon (registered trademark) Injection 1022B" by Ube Industries, Ltd.

Polyamide resin (PA resin) 2: Polyamide 6, trade name "UBE Nylon (registered trademark) Injection 1030B" by Ube Industries, Ltd.

Polymer 2: Polymer produced according to the following production method.

BR: Butadiene rubber (trade name "UBEPOL BR150L1" by Ube Industries, Ltd. Compatibilizer 1: trade name "Tough-Tech (registered trademark) M1913" by Asahi Kasei Corp.

Antiaging Agent 1: 2,2'-methylenebis(4-ethyl-6-tert-butylphenol), "Nocrac (registered trademark) NS-5" by Ouchi Shinko Chemical Industrial Co., Ltd.

### [Production Method for Polymer 2]

91 g of styrene and 379 g of toluene were put into a fully-dried, 2000-mL pressure-resistant stainless reactor.

In a glove box in a nitrogen atmosphere, 0.1 mmol of mono(bis(1,3-tertbutyldimethylsilyl)indenyl)bis(bis(dimethylsilyl)amide) gadolinium complex 1,3-[(t-Bu)Me₂Si]₂C₉H₅Gd[N(SiHMe₂)2], 0.1 mmol of dimethylanilinium tetrakis(pentafluorophenyl)borate [Me₂NHPhB(C₆F₅)₄], and 0.2 mmol of triisobutyl aluminum were put into a glass container, and 63 mL of toluene was added thereto to prepare a catalyst solution. The catalyst solution was added to the previous, pressure-resistant stainless reactor and heated up to 60°C.

Next, ethylene was introduced into the pressure-resistant stainless reactor at a pressure of 1.5 MPa, and copolymerization was carried out at 75°C for a total of 3 hours. Regarding 1,3-butadiene, 280 g of a toluene solution containing 70 g of 1,3-butadiene was continuously added at a rate of 1.5 to 1.6 mL/min.

Next, 1 mL of an isopropanol solution of 5% by mass of 2,2'-methylene-bis(4-ethyl-6-t-butylphenol) (NS-5) was added to the pressure-resistant stainless reactor to terminate the reaction.

Next, the copolymer was separated using a large amount of methanol, and dried in vacuum at 50°C to give a polymer 2.

The physical properties of the resultant polymer 2 are shown in Table 3. The physical properties of the polymer 2 were measured according to the above-mentioned "[Measurement Methods for Physical Properties of Polymer]".

**Table 3**

| | Polymer 2 |
|---|---|
| Weight-Average Molecular Weight (Mw) (×10³) | 457 |
| Number-Average Molecular Weight (Mn) (×10³) | 184 |
| Peak Top Molecular Weight (Mp) (×10³) | 330 |
| Molecular Weight Distribution (Mw/Mn) | 2.5 |
| Ethylene Unit Content (mol%) | 69 |
| Butadiene Unit Content (mol%) | 26 |
| Styrene Unit Content (mol%) | 5 |
| Melting Point (°C) | 80 |
| Crystallinity Degree (%) | 16.4 |

In the polymer 2, the total of the ethylene unit content, the butadiene unit content and the styrene unit content was 100 mol%, and a butylene unit content was 0 mol%. The polymer 2 did not have a peak at 10 to 24 ppm in the ¹³C-NMR spectral chart thereof, which confirms that the main chain of the polymer 2 synthesized here was composed of an acyclic structure alone.

### <Production of Resin Molded Article]

According to the formulation in Table 4 and using an extruder (unidirectional rotary twin-screw extruder, Omega 30H (φ30, L/D = 60, by Steer Japan) and a feeder (weight-metering single-screw feeder KS60), the components were blended at a supply speed of 9 kg/h and a mixing temperature of 25°C. Subsequently, the mixture was extruded as strands of φ3 mm. These were cooled and cut into pellets. The resultant resin composition was pressed at 250°C for 5 minutes using a mold having a thickness of 2 mm, and then rapidly cooled for 5 minutes to give a resin molded article of 150 mm × 150 mm × 2 mm.

### <Evaluation>

The surface of the resin molded article of Examples 2 to 8 and Comparative Example 2 was profiled using an atomic force microscope (AFM, SPM-9700HT, by Shimadzu Corporation). The measurement condition is shown below.

### (Measurement Condition)

Phase scanning range: 20 µm × 20 pm
Scanning speed: 0.5 Hz
Number of pixels: 512 × 512
Cantilever used: OMCL-AC160TS-R3 by Olympus Corporation (resonant frequency: 300 kHz, spring constant 26 N/m)

**Table 4**

| | | | Example 2 | Example 3 | Example 4 | Example 5 | Example 6 | Example 7 | Example 8 | Comparative Example 2 |
|---|---|---|---|---|---|---|---|---|---|---|
| Resin Compositio n | PA Resin 1 | part by mass | 80 | 80 | 80 | - | - | 90 | - | 80 |
| | PA Resin 2 | part by mass | - | - | - | 80 | 80 | - | 90 | - |
| | Polymer 2 | part by mass | 20 | 20 | 20 | 20 | 20 | 10 | 10 | - |
| | BR | part by mass | - | - | - | - | - | - | - | 20 |
| | Compatibilizer 1 | part by mass | 5 | 6.7 | 10 | 5 | 6.7 | 5 | 5 | 10 |
| | Antiaging Agent 1 | part by mass | 2 | 2 | 2 | 2 | 2 | 2 | 2 | 2 |

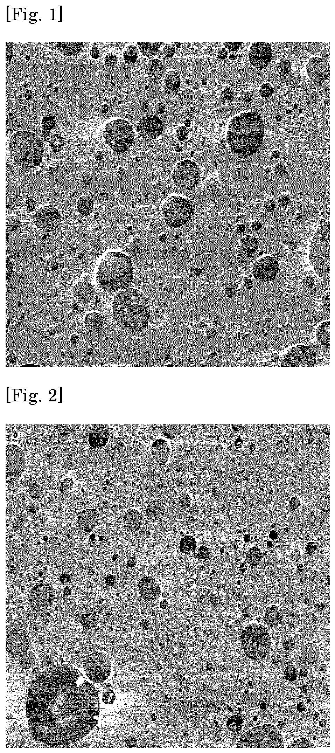

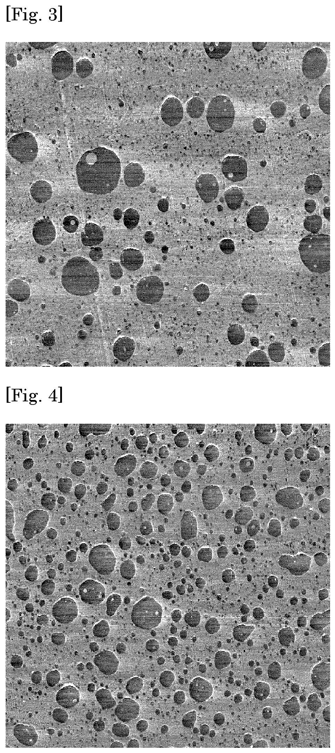

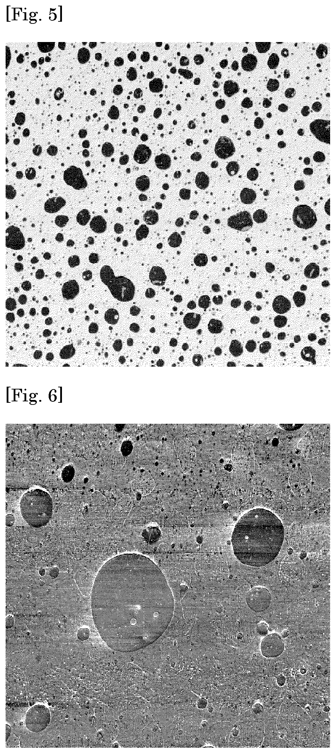

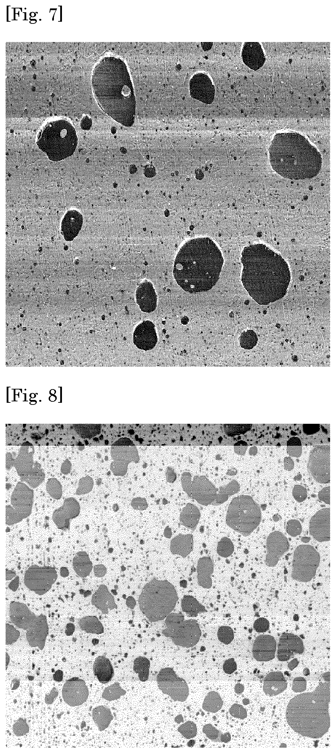

Figs. 1 to 8 each show an atomic force microscope image (in a range of 20 pm × 20 pm) of the surface of the resin molded article of Examples 2 to 8 and Comparative Example 2. In all Examples in which the polymer 2 was mixed with a polyamide resin, the polymer dispersibility was good. In Examples 5, 6 and 8 using the polyamide resin 2, the polymer dispersibility was better than in Comparative Example 2 where a butadiene rubber and a polyamide resin were mixed. In Examples 5, 6 and 8, the dispersibility was better than in Examples 2 to 4 and 7 using the polyamide resin 1. The polyamide resin 2 is characterized by having a higher viscosity than that of the polyamide resin 1, and therefore it is presumed that the viscosity of the polyamide resin and the amount of the compatibilizer would have some influence on the polymer dispersibility.

### [Examples 9 to 13, Comparative Example 3]

### <Preparation of Resin Composition>

Resin compositions were prepared according to the formulation in Table 6.

Details of the components in Table 6 are as mentioned below.

Polyamide resin (PA resin) 2: Polyamide 6, trade name "UBE Nylon (registered trademark) Injection 1030B" by Ube Industries, Ltd.

Polymer 1: Polymer produced according to the above-mentioned production method. Polymer 2: Polymer produced according to the above-mentioned production method. Polymer 3: Polymer produced according to the following production method. Compatibilizer 1: trade name "Tough-Tech (registered trademark) M1913" by Asahi Kasei Corp.

Compatibilizer 2: trade name "Tough-Tech (registered trademark) M1943" by Asahi Kasei Corp.

Antiaging Agent 2: "SUMILIZER (registered trademark) GS(F)" by Sumitomo Chemical Co., Ltd.

Antiaging Agent 3: "SUMILIZER (registered trademark) GP" by Sumitomo Chemical Co., Ltd.

### [Production Method for Polymer 3]

91 g of styrene and 379 g of toluene were put into a fully-dried, 2000-mL pressure-resistant stainless reactor.

In a glove box in a nitrogen atmosphere, 0.1 mmol of mono(bis(1,3-tert-butydimethylsilyl)indenyl)bis(bis(dimethylsilyl)amide) gadolinium complex 1,3-[(t-Bu)Me₂Si]₂C₉H₅Gd[N(SiHMe₂)2], 0.1 mmol of dimethylanilinium tetrakis(pentafluorophenyl)borate [Me₂NHPhB(C₆F₅)₄] and 0.3 mmol of triisobutyl aluminum were put into a glass container, and 63 mL of toluene was added thereto to prepare a catalyst solution. The catalyst solution was added to the previous, pressure-resistant stainless reactor and heated up to 60°C.

Next, ethylene was introduced into the pressure-resistant stainless reactor at a pressure of 1 to 1.5 MPa, and copolymerization was carried out at 85°C for a total of 4 hours. Regarding 1,3-butadiene, 280 g of a toluene solution containing 70 g of 1,3-butadiene was continuously added at a rate of 1.1 to 1.2 mL/min.

Next, 1 mL of an isopropanol solution of 5% by mass of 2,2'-methylene-bis(4-ethyl-6-t-butylphenol) (NS-5) was added to the pressure-resistant stainless reactor to terminate the reaction.

Next, the copolymer was separated using a large amount of methanol, and dried in vacuum at 50°C to give a polymer 3.

The physical properties of the resultant polymer 3 are shown in Table 5. The physical properties of the polymer 3 were measured according to the above-mentioned "Measurement Methods for Physical Properties of Polymer".

**Table 5**

| | Polymer 3 |
|---|---|
| Weight-Average Molecular Weight (Mw) (×10³) | 513 |
| Number-Average Molecular Weight (Mn) (×10³) | 163 |
| Peak Top Molecular Weight (Mp) (×10³) | 299 |
| Molecular Weight Distribution (Mw/Mn) | 3.2 |
| Ethylene Unit Content (mol%) | 66 |
| Butadiene Unit Content (mol%) | 29 |
| Styrene Unit Content (mol%) | 5 |
| Melting Point (°C) | 80 |
| Crystallinity Degree (%) | 18.5 |

In the polymer 3, the total of the ethylene unit content, the butadiene unit content and the styrene unit content was 100 mol%, and a butylene unit content was 0 mol%. The polymer 3 did not have a peak at 10 to 24 ppm in the ¹³C-NMR spectral chart thereof, which confirms that the main chain of the polymer 3 synthesized here was composed of an acyclic structure alone.

### <Production of Resin Molded Article>

According to the formulation in Table 6 and using an extruder (unidirectional rotary twin-screw extruder, Omega 30H (φ30, L/D = 60, by Steer Japan) and a feeder (weight-metering single-screw feeder KS60), the components were blended at a supply speed of 9 kg/h and a mixing temperature of 25°C. Subsequently, the mixture was extruded as strands of φ3 mm. These were cooled and cut into pellets. The resultant resin composition was pressed at 250°C for 5 minutes using a mold having a thickness of 2 mm, and then rapidly cooled for 5 minutes to give a resin molded article of 150 mm ×150 mm × 2 mm.

In Comparative Example 3, the polyamide resin 2 was pressed at 250°C for 5 minutes using a mold having a thickness of 2 mm, and then rapidly cooled for 5 minutes to give a resin molded article of 150 mm × 150 mm × 2 mm.

### <Evaluation>

### (1) Atomic Force Microscope (AFM) Observation

The surface of the resin molded article of Examples 9 to 13 was profiled using an atomic force microscope (SPM-9700HT, by Shimadzu Corporation). The measurement condition is the same as above.

### (2) Tensile Strength and Elongation at breakage

The resin molded article of Examples 9 to 11 and Comparative Example 3 was formed into No. 3 dumbbell-shaped test pieces based on JIS K 6251:2017.

The tensile strength (Tb) was measured using a tensile tester (by Instron Corporation) based on JIS K 6251:2017. The test piece was 100% elongated at 25°C, and the maximum tensile force needed for breaking the test piece was measured.

Regarding the elongation at breakage (Eb), the test piece was pulled at a rate of 100 mm/min at 25°C, and the length of the test piece at the time when it was broken was measured, and the length at that time relative to the length (100%) before pulling was calculated.

The measured results of the tensile strength and the elongation at breakage of the resin molded articles of Examples 9 to 11 and Comparative Example 3 are shown in Table 6.

**Table 6**

| | | | Example 9 | Example 10 | Example 11 | Example 12 | Example 13 | Comparative Example 3 |
|---|---|---|---|---|---|---|---|---|
| Resin Composition | PA Resin 2 | part by mass | 80 | 80 | 80 | 80 | 80 | 100 |
| | Polymer 1 | part by mass | 20 | - | - | - | - | - |
| | Polymer 2 | part by mass | - | 20 | - | - | - | - |
| | Polymer 3 | part by mass | - | - | 20 | 20 | 20 | - |
| | Compatibilizer 1 | part by mass | 6.7 | 6.7 | 6.7 | 6.7 | - | - |
| | Compatibilizer 2 | part by mass | - | - | - | - | 6.7 | - |
| | Antiaging Agent 2 | part by mass | 2 | 2 | 2 | 2 | 2 | - |
| | Antiaging Agent 3 | part by mass | 2 | 2 | 2 | 2 | 2 | - |
| Resin Molded Article | Tensile Strength (Tb) | Mpa | 56 | 58 | 58 | - | - | 81.1 |
| | Elongation at breakage (Eb) | % | 361 | 361 | 370 | - | - | 284 |

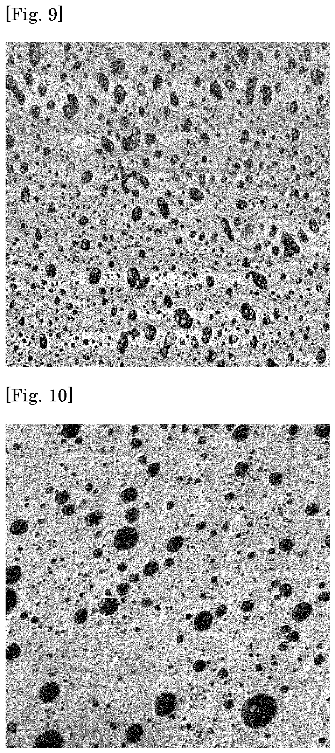

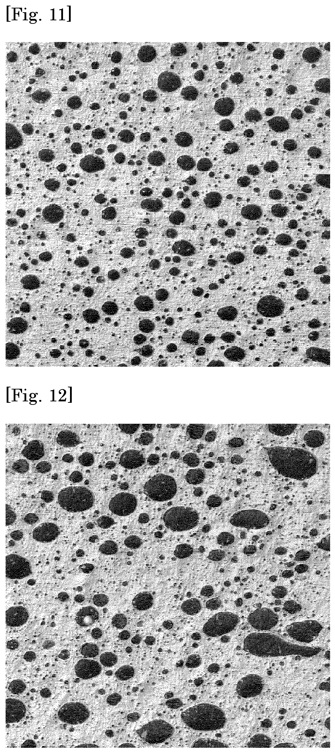

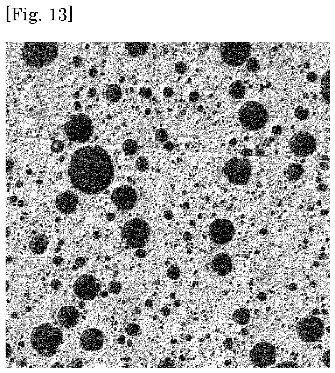

Figs. 9 to 13 each show atomic force microscope (AFM) images of the surfaces of the resin molded articles of Examples 9 to 13. In Examples 9 to 13, an appropriate amount of a compatibilizer was added and a resin having a relative high viscosity was used, and therefore, the polymer was almost uniformly dispersed in the polyamide resin as a fine dispersed phase therein.

As shown in Table 6, the resin molded articles of Examples 9 to 11 have a somewhat lowered tensile strength as compared with that of Comparative Example 3, but they all had an extremely increased elongation at breakage. Specifically, it can be said that the resin molded article formed of the resin composition containing the polymer in the present invention and a polyamide resin is not only excellent in toughness and impact resistance as shown in Table 2 but also excellent in elongation.

## Claims

1. A resin composition comprising a copolymer that contains a conjugated diene unit, a non-conjugated olefin unit and an aromatic vinyl unit and has a butylene unit content of 0 mol%, and a polyamide resin.

2. The resin composition according to claim 1, wherein the content of the copolymer is 1 to 81% by mass of the total mass of the copolymer and the polyamide resin.

3. The resin composition according to claim 1 or 2, wherein in the copolymer, the conjugated diene unit content is 5 to 70 mol%, the non-conjugated olefin unit content is 25 to 95 mol%, and the aromatic vinyl unit content is 2 to 30 mol%.

4. The resin composition according to any one of claims 1 to 3, wherein the melting point, as measured with a differential scanning calorimeter (DSC), of the copolymer is 30 to 130°C.

5. The resin composition according to any one of claims 1 to 4, wherein the polystyrene-equivalent weight-average molecular weight of the copolymer is 50,000 to 2,000,000.

6. The resin composition according to any one of claims 1 to 5, wherein the crystallinity degree of the copolymer is 0.5 to 50%.

7. The resin composition according to any one of claims 1 to 6, wherein the non-conjugated olefin unit is an acyclic non-conjugated olefin unit.

8. The resin composition according to claim 7, wherein the acyclic non-conjugated olefin unit is composed of an ethylene unit alone.

9. The resin composition according to any one of claims 1 to 8, wherein the aromatic vinyl unit contains a styrene unit.

10. The resin composition according to any one of claims 1 to 9, wherein the conjugated diene unit contains at least one selected from the group consisting of a 1,3-butadiene unit and an isoprene unit.

11. The resin composition according to any one of claims 1 to 10, further containing an antiaging agent.

12. The resin composition according to any one of claims 1 to 11, further containing a compatibilizer.

13. The resin composition according to claim 12, wherein the compatibilizer is a modified copolymer of a polymer modified with maleic acid, and the polymer to be modified is at least one selected from among a styrene-isobutylene-styrene block copolymer (SIBS), a styrene-butadiene-styrene block copolymer (SBS), a styrene-ethylene/butylene-styrene block copolymer (SEBS), and a styrene-ethylene/propylene block copolymer (SEPS).

14. The resin composition according to claim 12 or 13, wherein the content of the compatibilizer is 0.5 to 20 parts by mass relative to 100 parts by mass of the total of the copolymer and the polyamide resin.

15. The resin composition according to any one of claims 11 to 14, wherein the antiaging agent contains an antiaging agent that contains 2 or more branched alkyl group-having phenyl groups.

16. A resin molded article using the resin composition of any one of claims 1 to 15.

17. A tire using the resin composition of any one of claims 1 to 15.

18. An automotive part using the resin composition of any one of claims 1 to 15.
